# EUROPÄISCHE PATENTSCHRIFT

(11) **EP 3 802 228 B1**
(45) Veröffentlichungstag und Bekanntmachung des Hinweises auf die Patenterteilung: **12.11.2025**
(21) Anmeldenummer: 19721996.7
(22) Anmeldetag: 12.04.2019
(51) Int. Cl.: B60R 16/023, H04B 15/02

(54) **STEUERGERÄTVORRICHTUNG FÜR EIN KRAFTFAHRZEUG, KRAFTFAHRZEUG**
CONTROLLER DEVICE FOR A MOTOR VEHICLE, AND MOTOR VEHICLE
DISPOSITIF D'UNITÉ COMMANDE POUR VÉHICULE AUTOMOBILE ET VÉHICULE AUTOMOBILE

(30) Priorität: 07.06.2018 DE 102018209001
(43) Veröffentlichungstag der Anmeldung: 14.04.2021
(73) Patentinhaber: Robert Bosch GmbH, 70442 Stuttgart (DE)
(72) Erfinder: KRALICEK, Peter, 71672 Marbach (DE); HUEBL, Jochen, 71701 Schwieberdingen (DE)
(86) Internationale Anmeldenummer: PCT/EP2019/059584
(87) Internationale Veröffentlichungsnummer: WO 2019/233664

(56) Entgegenhaltungen:
- DE-A1- 102011 084 942
- DE-A1- 102017 006 979
- DE-A1- 19 636 816
- DE-A1- 19 713 449
- US-A- 5 713 541
- US-A1- 2012 098 591

## Beschreibung

Die Erfindung betrifft eine Steuergerätvorrichtung für ein Kraftfahrzeug, insbesondere für ein autonom betreibbares Kraftfahrzeug, mit einem Steuergerät zum Betreiben des Kraftfahrzeugs und mit einer Schutzeinrichtung zum Schützen des Steuergeräts vor elektromagnetischen Störfeldern und/oder Störsignalen.

Weiterhin betrifft die Erfindung ein Kraftfahrzeug mit einer derartigen Steuergerätvorrichtung.

### Stand der Technik

Heutige Steuergeräte werden bereits in der Design- und Konstruktionsphase hinsichtlich ihrer Störanfälligkeit gegenüber elektromagnetischer Strahlung beziehungsweise Beeinflussung abgesichert und geprüft. Die zu erfüllenden Anforderungen ergeben sich dabei aus gesetzlichen Anforderungen und zusätzlichen Kundenanforderungen. Die Steuergeräte müssen innerhalb dieser Anforderungen fehlerfrei oder zumindest in einem sicheren Betriebsmodus arbeiten oder zurückfallen. Dabei sind die Anforderungen in der Regel derart gewählt, dass sie die meisten im Betrieb auftretenden elektromagnetischen Störfelder abdecken. In speziellen Fällen, wie beispielsweise Feldüberhöhungen, welche sich durch die Anordnung des Steuergeräts im Kraftfahrzeug und/oder am Kabelbaum ergeben, durch vermehrten Verzicht von Metall im Karosseriebau oder aufgrund intentionaler extremer Beeinflussungsversuche, können elektromagnetische Störfelder und -signal jenseits dieser Anforderungen auftreten. Die bekannten Schutzeinrichtungen reichen dabei nicht dazu aus, auch diese zu erkennen.

Die Offenlegungsschrift DE 10 2011 084 942 A1 offenbart eine Vorrichtung zur elektromagnetischen Funkentstörung. Die Vorrichtung weist eine Entstörschaltung auf, die dazu ausgebildet ist, ein Störsignal zu empfangen und mittels eines Abstrahlelements ein Gegensignal zu erzeugen. Die Entstörschaltung erzeugt das Gegensignal derart, dass ein mit dem Gegensignal korrespondierendes elektromagnetisches Gegenfeld ein mit dem Störsignal korrespondierendes Störfeld destruktiv überlagert. Eine derartige Vorrichtung geht auch aus der Offenlegungsschrift US 2012/0098591 A1 hervor. Die Offenlegungsschrift DE 197 13 449 A1 offenbart einen Funkentstörfilter mit einem Regelschaltkreis, der dazu ausgebildet ist, auf einem elektrischen Leiter auftretende Störsignale durch das Einkoppeln von Entstörsignalen zu dämpfen.

### Offenbarung der Erfindung

Die erfindungsgemäße Steuergerätvorrichtung mit den Merkmalen des Anspruchs 1 hat den Vorteil, dass die Steuergerätvorrichtung besser gegen elektromagnetische Störfelder geschützt ist, indem diese besser erkannt werden können und dadurch eine verbesserte Sicherheitsreaktion ermöglicht ist. Erfindungsgemäß weist die Schutzeinrichtung dazu eine Empfangseinrichtung zum Erfassen elektromagnetischer Störfelder, eine mit der Empfangseinrichtung verbundene Verarbeitungseinrichtung zum Bereitstellen von Informationen über ein durch die Empfangseinrichtung erfasstes elektromagnetisches Störfeld und eine Steuereinrichtung auf, die in Abhängigkeit von den erfassten Informationen das erfasste Störfeld bewertet. Durch die Bewertung des Störfeldes ist es möglich, über Sicherheitsmaßnahmen zu entscheiden, die eingeleitet werden sollen oder nicht. Durch die separate Empfangseinrichtung ist das Erfassen elektromagnetischer Störfelder sicher gewährleistet. Insbesondere ist die Empfangseinrichtung außerhalb eines Gehäuses des Steuergeräts angeordnet, sodass eine optimale Anordnung der Empfangseinrichtung unabhängig von dem Steuergerät möglich ist. Anstelle eines Störfelds kann auch ein Störsignal erfasst und bewertet werden.

Erfindungsgemäß ist das Steuergerät dazu ausgebildet, eine Sicherheitsmaßnahme einzuleiten, wenn ein von der Empfangseinrichtung erfasstes Störfeld von der Steuereinrichtung als kritisch bewertet wird. So wird beispielsweise bei Erfassen eines kritischen Störfeldes eine Rückfallebene des Steuergeräts aktiviert, in welcher die wesentlichen Grundfunktionen des Steuergeräts weiterhin gewährleistet sind, und Funktionen, die empfindlich auf das erfasste elektromagnetische Störfeld reagieren könnten, deaktiviert oder in einen sicheren Betrieb geschaltet werden. Ebenso möglich ist die Nutzung von Redundanzen im Verbund mit anderen Steuergeräten.

Weiterhin ist bevorzugt vorgesehen, dass die Empfangseinrichtung zumindest eine elektrische Leitung aufweist, die sich zumindest abschnittsweise entlang eines Kabelbaums des Kraftfahrzeugs als Empfangsantenne für elektromagnetische Störfelder insbesondere als im unteren Frequenzbereich erstreckt. Dadurch liegt die Empfangseinrichtung außerhalb des Gehäuses des Steuergeräts und erlaubt eine verbesserte Erfassung elektromagnetischer Störfelder und/oder -signale. Insbesondere die Anordnung außerhalb des Steuergeräts erlaubt eine großflächige Erfassung und damit eine vorteilhafte Bewertung.

Erfindungsgemäß weist die Empfangseinrichtung zumindest eine Leitung auf einer Leiterplatte des Steuergeräts auf, die einen Anschlussstecker des Steuergeräts für den Kabelbaum zur magnetischen Kopplung umschließt. Damit werden an der Stelle, an welcher das Steuergerät mit dem Kabelbaum elektrisch verbunden ist, durch die magnetische Kopplung etwaige Gleichtaktströme auf dem Kabelbaum detektiert, insbesondere im unteren Frequenzbereich.

Weiterhin ist bevorzugt vorgesehen, dass die Empfangseinrichtung auf der Leiterplatte des Steuergeräts zumindest eine als Empfangsantenne wirkende Leitstruktur aufweist, die insbesondere dazu ausgebildet ist, elektromagnetische Felder in einem höheren Frequenzbereich zu erfassen. Dazu ist die Leiterstruktur insbesondere breitbandig ausgebildet. Durch Kombination von mehreren in Lage und Orientierung unterschiedlichen Leiterstrukturen ist dabei auch eine Erkennung von Störfeldern aus verschiedenen Raumrichtungen möglich, sowie die Bestimmung der Raumrichtung, aus welcher ein Störfeld kommt.

Gemäß einer bevorzugten Weiterbildung der Erfindung weist die Verarbeitungseinrichtung zumindest einen Analog-Digital-Wandler beziehungsweise -Umsetzer auf. Durch die Digitalisierung der von der Empfangseinrichtung bereitgestellten Signale ist eine einfache Auswertung der Informationen gewährleistet.

Besonders bevorzugt ist der Analog-Digital-Wandler mit einer frequenzselektiven Empfindlichkeit gegenüber hochfrequenten Störsignalen ausgebildet.

Gemäß einer bevorzugten Weiterbildung der Erfindung weist die Verarbeitungseinrichtung alternativ oder zusätzlich eine Hochfrequenzschaltung zum Auswerten des von der Empfangseinrichtung bereitgestellten Signals auf. Die Hochfrequenzschaltung ist zwar im Vergleich zu dem Analog-Digital-Wandler etwas aufwendig, sie ist jedoch dazu geeignet, aus der Hochfrequenz eine messbare analoge Spannung zu generieren, beispielsweise mittels eines Logarithmierers.

Weiterhin ist bevorzugt vorgesehen, dass die Steuereinrichtung zumindest einen Mikrokontroller aufweist. Der Mikrokontroller dient insbesondere zur Auswertung der von der Verarbeitungseinrichtung bereitgestellten Information, wobei diese optional vorverarbeitet und gefiltert wird, um die Informationen beziehungsweise das erfasste Störfeld oder -signal zu bewerten. Wie obenstehend bereits erwähnt, leitet die Steuereinheit in Abhängigkeit von der Bewertung gegebenenfalls eine oder mehrere Sicherheitsmaßnahmen ein.

Das erfindungsgemäße Kraftfahrzeug mit den Merkmalen des Anspruchs 8 zeichnet sich durch die erfindungsgemäße Steuergerätvorrichtung aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden.

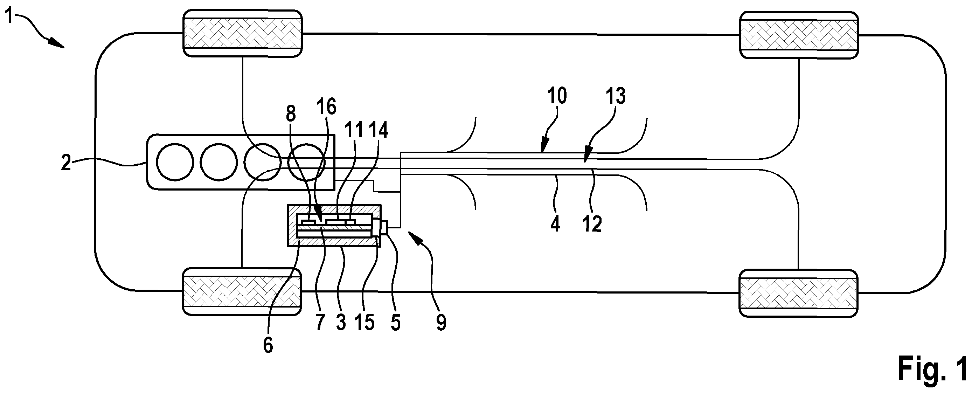

Dazu zeigt
- Figur 1: ein Kraftfahrzeug mit einer vorteilhaften Steuergerätvorrichtung in einer vereinfachten Darstellung.

Figur 1 zeigt in einer vereinfachten Darstellung ein Kraftfahrzeug 1, das eine Antriebseinrichtung 2, die mit Antriebsrädern des Kraftfahrzeugs verbunden ist, ein Steuergerät 3 zum Betreiben des Kraftfahrzeugs und insbesondere der Antriebseinrichtung 2 sowie einen Kabelbaum 4 aufweist, welcher das Steuergerät 3 elektrisch und signaltechnisch mit der Antriebseinrichtung 2 und weiteren elektrischen/elektronischen Komponenten des Kraftfahrzeugs 1 verbindet, wie beispielsweise Sensoren, Kühl- oder Heizeinrichtungen, Leuchteinrichtungen, Sicherheitseinrichtungen oder dergleichen.

Das Steuergerät 3 weist einen Anschlussstecker 5 auf, durch welchen es mit dem Kabelbaum 4 elektrisch und signaltechnisch verbunden ist. Das Steuergerät 3 weist ein Gehäuse 6 auf, in welchem zumindest eine Leiterplatte 7 angeordnet ist, auf welcher wenigstens eine Steuereinheit 8, insbesondere in Form eines Mikrokontrollers, angeordnet ist.

Dem Steuergerät 3 ist außerdem eine Schutzeinrichtung 9 zugeordnet, die zur Verbesserung der Betriebssicherheit des Steuergeräts 3 bei Auftreten von elektromagnetischen Störungen dient.

Die Schutzeinrichtung 9 weist eine Empfangseinrichtung 10 auf, eine Verarbeitungseinrichtung 11 sowie die Steuereinrichtung 8. Gemäß dem vorliegenden Ausführungsbeispiel weist die Empfangseinrichtung 10 eine elektrische Leitung 12 auf, die sich von dem Steuergerät 3 entlang des Kabelbaums 4 erstreckt und eine Empfangsantenne 13 für elektromagnetische Störfelder im unteren Frequenzbereich bildet. Durch den Verbindungsstecker 5 ist die Leitung 12 mit der Verarbeitungseinrichtung 11 elektrisch gekoppelt. Die Verarbeitungseinrichtung 11 weist insbesondere einen Analog-Digital-Wandler 14 auf, der insbesondere eine frequenzselektive Empfindlichkeit gegenüber hochfrequenten Störsignalen aufweist, welche zum Zwecke der Erkennung elektromagnetischer Felder kostengünstig ausgenutzt werden kann. Insbesondere eine entsprechende Vorschaltung des Analog-Digital-Wandlers 14, beispielsweise mit einer Vorspannung auf "high" oder "low"-Level, führt zu einer gezielten Ausnutzung der unsymmetrischen Eingangskennlinie des Analog-Digital-Wandlers und damit zur Signalgenerierung und Erkennung.

Die Steuereinrichtung 8, insbesondere der bereits genannte Mikrokontroller, ist dazu ausgebildet, die digitalen von der Verarbeitungseinrichtung 11 bereitgestellten Informationen auszuwerten und ein von der Empfangsantenne 13 erfasstes elektromagnetisches Störfeld oder -signal zu bewerten und insbesondere zu entscheiden, ob dieses als kritisch zu bewerten ist. Ist dies der Fall, so löst die Steuereinrichtung zumindest eine Sicherheitsmaßnahme aus, welche beispielsweise bewirkt, dass das Steuergerät 3 in einen sicheren Betriebsmodus, der gegenüber elektromagnetischen Störungen unempfindlich ist, geschaltet wird. Optional sendet die Steuereinrichtung ein Warnsignal an einen Benutzer des Kraftfahrzeugs oder andere Steuergeräte und/oder speichert das Ereignis für eine spätere Auswertung in einem Speicher des Steuergeräts 3.

Die Empfangseinrichtung 10 weist eine auf der Leiterplatte 7 eingebettete elektrische Leitung 15 auf, die den Anschlussstecker 5 umschließt und so über magnetische Kopplung etwaige Gleichtaktströme auf dem Kabelbaum 4 detektiert, insbesondere in einem unteren Frequenzbereich, und dadurch ebenfalls elektromagnetische Felder, die auf den Kabelbaum 4 wirken, erfasst. Optional weist die Empfangseinrichtung 10 zumindest eine auf der Leiterplatte 7 integrierte Leiterstruktur 16 auf, welche breitbandig als integrierte Empfangsantenne dient für die Erfassung von Störungen in höheren Frequenzbereichen. Durch Kombination von mehreren in Lage und Orientierung unterschiedlichen Leiterstrukturen 16 ist dabei auch eine Erkennung von Störfeldern aus verschiedenen Raumrichtungen gewährleistet.

Alternativ zu dem Analog-Digital-Wandler 14 ist es auch denkbar, die Verarbeitungseinrichtung 11 mit einer Hochfrequenzschaltung auszubilden, welche geeignet ist, aus der Hochfrequenz eine messbare analoge Spannung zu generieren, beispielsweise mithilfe eines Logarithmierers.

Während der üblichen EMV-Freigabemessung können die Schaltungsteile und Filter-Schwellen der Schutzeinrichtung 10 so abgeglichen werden, dass sie bei elektromagnetischer Beeinflussung nach Spezifikation noch nicht ansprechen und damit eine Detektion von Störungen außerhalb der spezifizierten Parameter/Anforderungen ermöglichen.

## Patentansprüche

1. Steuergerätvorrichtung für ein Kraftfahrzeug, insbesondere für ein autonom betreibbares Kraftfahrzeug, mit einem Steuergerät (3) zum Betreiben des Kraftfahrzeugs, und mit einer Schutzeinrichtung (9) zum Schützen des Steuergeräts (3) vor elektromagnetischen Störfeldern oder Störsignalen, wobei die Schutzeinrichtung (9) eine Empfangseinrichtung (10) zum Erfassen elektromagnetischer Störfelder oder Störsignale aufweist, **dadurch gekennzeichnet, dass** die Schutzeinrichtung (9) eine Verarbeitungseinrichtung (11) zum Bereitstellen von Informationen über ein durch die Empfangseinrichtung (10) erfasstes elektromagnetisches Störfeld oder Störsignal, und eine Steuereinrichtung (8) aufweist, wobei die Steuereinrichtung ausgebildet ist, in Abhängigkeit von den erfassten Informationen das erfasste Störfeld und/oder Störsignal zu bewerten und zu entscheiden , ob das Störfeld oder Störsignal als kritisch zu bewerten ist, und zumindest eine Sicherheitsmaßnahme einzuleiten, wenn das erfasste Störfeld oder Störsignal als kritisch bewertet wird, wobei die Empfangseinrichtung (10) zumindest eine elektrische Leitung auf einer Leiterplatte (7) des Steuergeräts (3) aufweist, die einen Anschlussstecker (5) des Steuergeräts (3) für den Kabelbaum (4) zur magnetischen Kopplung umschließt.

2. Steuergerätvorrichtung nach dem vorhergehenden Anspruch, **dadurch gekennzeichnet, dass** die Empfangseinrichtung (10) zumindest einen elektrischen Leiter (12) aufweist, der sich zumindest abschnittsweise entlang eines Kabelbaums (4) des Kraftfahrzeugs (1) als Empfangsantenne (13) für elektromagnetische Felder und/oder Störsignale erstreckt.

3. Steuergerätvorrichtung nach einem der vorhergehenden Ansprüche, **dadurch gekennzeichnet, dass** die Empfangseinrichtung (10) auf der Leiterplatte (7) des Steuergeräts (3) zumindest eine als Empfangsantenne wirkende Leiterstruktur (16) aufweist.

4. Steuergerätvorrichtung nach einem der vorhergehenden Ansprüche, **dadurch gekennzeichnet, dass** die Verarbeitungseinrichtung (11) zumindest einen Analog-Digital-Wandler (14) aufweist.

5. Steuergerätvorrichtung nach dem vorhergehenden Anspruch, **dadurch gekennzeichnet, dass** der Analog-Digital-Wandler (14) eine frequenzselektive Empfindlichkeit aufweist.

6. Steuergerätvorrichtung nach einem der vorhergehenden Ansprüche, **dadurch gekennzeichnet, dass** die Verarbeitungseinrichtung (11) eine Hochfrequenzschaltung aufweist.

7. Steuergerätvorrichtung nach einem der vorhergehenden Ansprüche, **dadurch gekennzeichnet, dass** die Steuereinrichtung (8) zumindest einen Mikrokontroller aufweist.

8. Kraftfahrzeug, insbesondere autonom betreibbares Kraftfahrzeug, **gekennzeichnet durch** eine Steuergerätvorrichtung nach einem der Ansprüche 1 bis 7.

## Claims

1. Controller apparatus for a motor vehicle, in particular for an autonomously operable motor vehicle, having a controller (3) for operating the motor vehicle, and having a protective device (9) for protecting the controller (3) from electromagnetic interference fields or interference signals, wherein the protective device (9) has a receiving device (10) for detecting electromagnetic interference fields or interference signals, **characterized in that** the protective device (9) has a processing device (11) for providing information about an electromagnetic interference field or interference signal detected by the receiving device (10), and a control device (8), wherein the control device is designed to assess the detected interference field and/or interference signal on the basis of the detected information and to decide whether the interference field or interference signal is to be assessed as critical, and to initiate at least one safety measure if the detected interference field or interference signal is assessed as critical, wherein the receiving device (10) has at least one electrical line on a printed circuit board (7) of the controller (3), which encompasses a connector socket (5) of the controller (3) for the cable harness (4) for magnetic coupling.

2. Controller apparatus according to the preceding claim, **characterized in that** the receiving device (10) has at least one electrical conductor (12) which extends at least in sections along a cable harness (4) of the motor vehicle (1) as a receiving antenna (13) for electromagnetic fields and/or interference signals.

3. Controller apparatus according to either of the preceding claims, **characterized in that** the receiving device (10) on the printed circuit board (7) of the controller (3) has at least one conductor structure (16) acting as a receiving antenna.

4. Controller apparatus according to one of the preceding claims, **characterized in that** the processing device (11) has at least one analogue-to-digital converter (14).

5. Controller apparatus according to the preceding claim, **characterized in that** the analogue-to-digital converter (14) has a frequency-selective sensitivity.

6. Controller apparatus according to one of the preceding claims, **characterized in that** the processing device (11) has a high-frequency circuit.

7. Controller apparatus according to one of the preceding claims, **characterized in that** the control device (8) has at least one microcontroller.

8. Motor vehicle, in particular an autonomously operable motor vehicle, **characterized by** a controller apparatus according to one of Claims 1 to 7.

## Revendications

1. Dispositif d'unité de commande pour un véhicule automobile, en particulier pour un véhicule automobile pouvant fonctionner de manière autonome, comprenant une unité de commande (3) destinée à faire fonctionner le véhicule automobile, et comprenant un dispositif de protection (9) destiné à protéger l'unité de commande (3) contre les champs parasites électromagnétiques ou les signaux parasites, le dispositif de protection (9) possédant un dispositif de réception (10) destiné à détecter les champs parasites électromagnétiques ou les signaux parasites, **caractérisé en ce que** le dispositif de protection (9) possède un dispositif de traitement (11) destiné à fournir des informations à propos d'un champ parasite électromagnétique ou d'un signal parasite détecté par le dispositif de réception (10), et un dispositif de commande (8), le dispositif de commande étant configuré pour évaluer le champ parasite et/ou le signal parasite détecté, en fonction des informations détectées et pour décider si le champ parasite ou le signal parasite doit être considéré comme critique, et pour engager au moins une mesure de sécurité lorsque le champ parasite ou le signal parasite détecté est considéré comme critique, le dispositif de réception (10) possédant au moins une ligne électrique sur une carte de circuit imprimé (7) de l'unité de commande (3), qui entoure pour le couplage magnétique une fiche de raccordement (5) de l'unité de commande (3) pour le faisceau de câbles (4).

2. Dispositif d'unité de commande selon la revendication précédente, **caractérisé en ce que** le dispositif de réception (10) possède au moins un conducteur électrique (12) qui s'étend au moins par portions le long d'un faisceau de câbles (4) du véhicule automobile (1) en tant qu'antenne de réception (13) pour des champs électromagnétiques et/ou des signaux parasites.

3. Dispositif d'unité de commande selon l'une des revendications précédentes, **caractérisé en ce que** le dispositif de réception (10) possède, sur la carte de circuit imprimé (7) de l'unité de commande (3), au moins une structure conductrice (16) agissant comme antenne de réception.

4. Dispositif d'unité de commande selon l'une des revendications précédentes, **caractérisé en ce que** le dispositif de traitement (11) possède au moins un convertisseur analogique-numérique (14).

5. Dispositif d'unité de commande selon la revendication précédente, **caractérisé en ce que** le convertisseur analogique-numérique (14) présente une sensibilité sélective en fréquence.

6. Dispositif d'unité de commande selon l'une des revendications précédentes, **caractérisé en ce que** le dispositif de traitement (11) possède un circuit à haute fréquence.

7. Dispositif d'unité de commande selon l'une des revendications précédentes, **caractérisé en ce que** le dispositif de commande (8) possède au moins une micro-unité de commande.

8. Véhicule automobile, en particulier véhicule automobile pouvant fonctionner de manière autonome, **caractérisé par** un dispositif d'unité de commande selon l'une des revendications 1 à 7.
